Europäisches Patentamt

European Patent Office

Office européen des brevets

(11) Publication number: **0 393 571**
**A1**

# EUROPEAN PATENT APPLICATION

(21) Application number: **90107235.5**

(51) Int. Cl.⁵: **G06F 15/80, G06F 15/18**

(22) Date of filing: **17.04.90**

(30) Priority: **21.04.89 IT 6729489**

(43) Date of publication of application:
**24.10.90 Bulletin 90/43**

(84) Designated Contracting States:
**AT BE CH DE DK ES FR GB GR IT LI LU NL SE**

(71) Applicant: **ISTITUTO TRENTINO DI CULTURA**
**Via S. Croce 77**
**I-38100 Trento(IT)**

(72) Inventor: **Stringa, Luigi**
**Localita Cerdinor 4**
**I-38050 Villazzano (Trento)(IT)**

(74) Representative: **Bosotti, Luciano et al**
**c/o Jacobacci-Casetta & Perani S.p.A. Via**
**Alfieri, 17**
**I-10121 Torino(IT)**

(54) **Computing network with nodes, procedures machines to configure it, and relative uses.**

(57) A computing network with nodes (SU) is described for "general purpose" uses that does not use the traditional Von Neumann architecture. Rather, it is composed of a set of Similarity Units (SU) connectable among themselves so as to allow configuration of a topology useful for the solution of the processing problems under consideration.

FIG. 2

# COMPUTING NETWORK WITH NODES, PROCEDURES, MACHINES TO CONFIGURE IT, AND RELATIVE USES

*Background of the Invention*

Almost all the data processing systems available today are based on Von Neumann architecture, which allowed, and still allows, the realization of flexible, general use machines and systems. Notwithstanding the great developments in programming languages and techniques in the past few years, the cost and difficulty of producing software is still the greatest limit to efficient use of the potential of the computer today. Furthermore, an intrinsic limitation of Von Neumann-based programmable machines is that to develop a program to resolve a problem it is necessary to know how to formalize an algorithm. Often, this knowledge is not available; in many cases the complexity and the amount of resources required render too onerous the formalization of necessary algorithms.

Furthermore, the class of problems with speculative and applicative interest for which the computing power of sequential machines is insufficient, becomes constantly greater. This has pushed research centers and developmental laboratories the world over to seek solutions able to progressively overcome these limits. In this way numerous studies and development ideas were born, with the goal of realizing process architecture, that make ever more use of parallelism. All the same, such architectures are almost always based on a set of Von Neumann machines, organized in the most varied ways, operating in parallel (contemporaneously). Such solutions, however, have proven less efficient than first thought, for the following reasons:

• the programming difficulties already noted are not only not reduced, but rather are increased by the need to parallelize the processes, keeping a needed synchronization, and

• data transfer between the units operating in parallel creates problems both at hardware (data rate) and software (management) levels that don't allow users to benefit - if not partially - from parallelism.

So-called connectionism constitutes a completely different approach (Hopfield networks, Boltzman machines, Kohonen networks, etc.), returned to the forefront in the past few years, after about 20 years of complete abandonment.

This approach, inspired in part by neural networks, bases the processing scheme on multilayer networks of very simple units with threshold-type responses. These units are connected among themselves so as to provide, after an appropriate training phase, the desired response to every input stimulus. Even so, the learning works generally by varying the "weights" of the connections, rather than the transfer functions of the entities found in the network nodes. This drastically limits the processing abilities, necessarily leading to high complexity even for simple problems. Furthermore, it makes it difficult to develop efficient learning procedures with rapid convergence, not to mention the requirement of long and costly network reprogramming.

*Goals and Summary of the Invention*

The invention presented here aims to develop a methodology and data processing systems able to overcome the limits described above. More precisely, its goal is to provide processing able to:

• eliminate the necessity of software development, substituting simple and efficient "learning" for programming;

• allow the solution of problems for which there is no known algorithmic solution;

• obtain effective calculation power notably superior to that available today.

In terms of synthesis, the solution presented by the invention is based on the capacity of defining and configuring means able to realize every calculation scheme and to learn from time to time a resolution strategy, without the necessity of having to know, and much less formalize, an appropriate algorithm. Specific"programming" by the user is not necessary. The set of machines subject to the invention and derivable from it has, furthermore, a very high processing ability, and assures execution times independent of the complexity of the problem. These machines allow, among other things, configurations obtained at the end of the learning phase to be stored in memory, enabling libraries of configurations to be formed and easily reloaded, giving the same flexibility as conventional computers.

More specifically, the invention is based on the idea of realizing data processing networks with a connection topology in some way analogous to that of connectionist networks, in which, however, the active connections do not have variable weights. The network nodes are similarity units (SU) that are modified during the learning phase to allow realization of the transfer function requested. The structure of the SU invented allows any transfer function to be realized, a complete departure from the connectionist example. The learning procedures, also objects of the invention, allow the network to be trained to solve any data processing problem, without requiring programming, as has already been mentioned. The invented networks are a model of systems able to transform the input data space (relative to any physical reality: images to recognize, sample signals, input data of an algorithm, etc.) into the output data space, carrying out successive transformations corresponding to internal layers of the network.

More precisely, from the space of the input units, the points of which represent the configurations of the input data, one passes, by network connections, to a more internal space, where the points are redescribed with new components. The procedure is thereafter applied to transform this new space into a successive space, until reaching a space that corresponds to the layer of the output units.

The network training procedures included in the invention (covered by the patent) are based on hierarchic learning, in which a statistically significant set of input data configurations is provided as input for the network and the corresponding desired configurations (the desired result of the data processing) are imposed as output.

Each network node generates, for each distinct configuration at its input ports, an input-output code by association, using the methods described in the following paragraphs. The procedure is propagated to the top layer of the network, that is the data output layer. For the nodes of that layer the association codes therefore will be those imposed (direct learning).

At the end of this phase, one may proceed to the substitution of those codes for which association always produces the same output codes, that is, when there is assurance that - for the data processing requested - these are equivalent. This procedure, which can be defined as back-learning, highlights the structures and the internal properties of the data treated.

Each processing problem therefore has its respective similarity net formed and trained. That which is defined for each is:
• number of layers,
• number of nodes (SU) in each layer,
• connections
• structure of the nodes, both in number and type of inputs and outputs, and for the relative transfer functions.

To obtain a general purpose data processing system, it is therefore necessary to design and realize architectures capable of building any network without having to construct ad hoc hardware each time. The set of such architectures (machines), which is also covered by the patent, is based on a modular structure of layers. Each layer principally consists of:
• the nodes (SU) of the layer,

• a connection management system (CMS),
• a communication bus system,
• a layer control unit (LCU).

The CMS for each layer or hierarchic layer of the network has its inputs connected to the SU outputs of the preceeding layer and its outputs to the SU of the layer in question. This is essentially a switching bank that allows, under control of the LCU, realization of all connections wanted. The number of layers and the number of SU per layer are completely programmable under control of the system control unit (SCU). This unit also manages the machine interface, both with the operator and standard periferals, and, when requested, process.

*Detailed description*

The proposed invention will now be described, solely as a non-limiting example, in reference to the attached figures, to wit:
• Figures 1-3 illustrate various of the possible ways of actuating a network according to the principles described here,
• Figure 4 shows the scheme of principle of a machine using the invention,
• Figure 5 shows the implementation scheme of one layer of the machine in Fig. 4 in greater detail,
• Figures 6-7 describe the functioning of the CMS between successive layers, and
• Figures 8-10 show the nodes (SU) of the network.

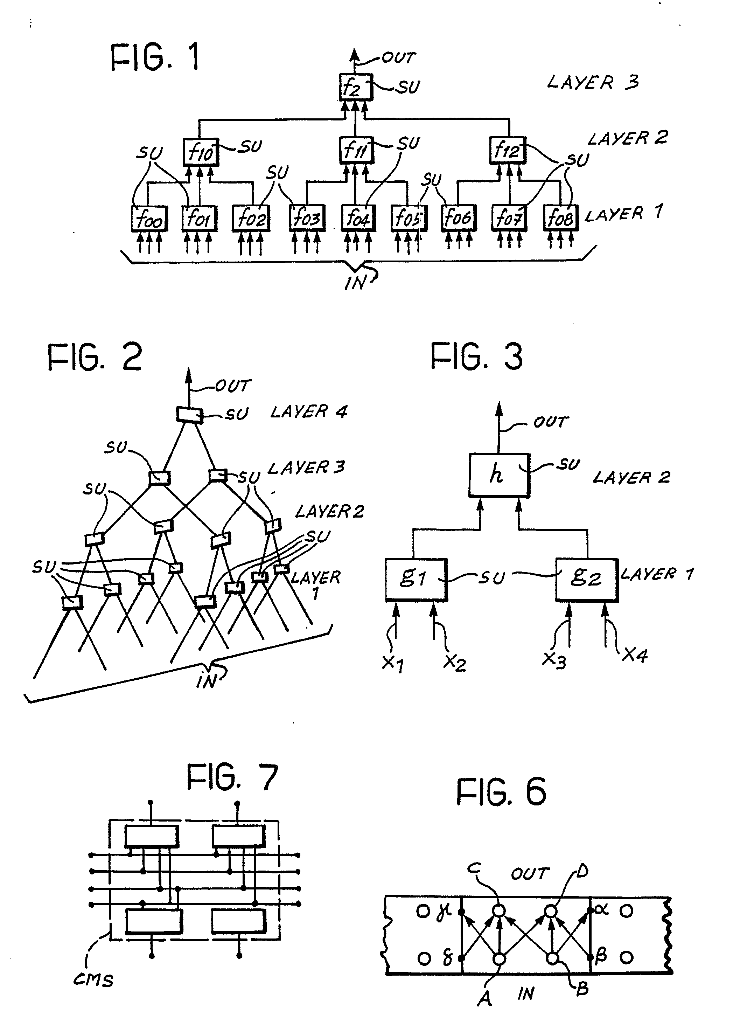

Essentially, a network built according to the principles described, (similarity net or S-net, labeled 1 in the attached figures) is a hierarchic architecture the nodes (SU) of which are computational elements able to realize any transfer function. Figure 1 shows, as an example, a single-dimension network with three layers, the SU of which have three input ports and one output port.

SU are completely defined when their transfer function $f_{ij}$ is defined. Of course, the $f_{ij}$ transfer functions theoretically may vary from one layer to another or even within the same layer. Furthermore, it is understood that generally the same number of layers, the size of the network, and the number of input and/or output ports may vary according to the needs specified and the nature of the problem. There also may be networks with input ports common to more than one SU, with connections between different layers, feed-back, etc.

In general, then, a network 1 is defined directly by its topological structure and by the transfer functions of the SU of which it is composed.

Figure 2 instead shows, as a non-limiting example, a four-layer, two-dimensional network 1, consisting of SU with two input ports and one output port. Note that the topology of two-dimensional networks of this type, if necessary with SU that have different numbers of input and output ports, are particularly suited to the treatment of two-dimensional structures and data and for the processing and recognition of configurations, for example in all problems of Image Processing, Scene Analysis and Recognition. Generally in these problems all SU of the same layer must/may have the same transfer function. This further simplifies the learning processes and reduces the amount of memory allocated to the units of the layer. In that case it is possible to organize the SU such that they may share a single memory for the entire layer, since only one transfer function is represented by them.

*Learning methods*

In general these networks have several possible modes of functioning, both in the learning and processing phases. For descriptive simplicity some learning methods covered by the patent will now be described for a one-dimensional network with $n$ ($n \geq 2$) layers, with SU having two input ports and one output port, as shown in Figure 3.

*1. Deterministic direct learning*

As input to the network, and therefore as input IN to the first layer SU, data configurations belonging to a learning set (LS) are sent sequentially. The LS, of course, must be "representative" of the universe of data for the processing problem at hand. In deterministic learning representativity implies the prescence in the learning set data of *all* the structures necessary to solve the problem. As shown in Fig. 3, the first layer SU assign a code (for example from $0$ to $k-1$, if $k$ is the number of distinct pairs in LS) to each pair at its input.

In this way all data configurations of the learning set LS - in the example all quadruples in LS with values $x_1, x_2, x_3, x_4$ - are codified by the SU. This may be implemented advantageously by requiring each SU to build a transcodification ma trix $E_i(0{:}k{-}1, 0{:}k{-}1)$ for each of these. Such matricies obviously represent the relative transfer functions $g_i$. One proceeds therefore to "codify" the LS with the codes produced operating at the first network layer. The relative outputs constitute the inputs to the next layer. For the following layers, up to the penultimate, it proceeds as for the first layer, operating, however, on the output pairs of the preceeding layer. Finally, at the last layer, an LS output code is associated to each pair extracted from those produced at the preceeding layer. At this point the network is trained: the codes not assigned correspond to configurations declared "non classifiable". Such procedures obviously may be generalized to SU with any number of input and output ports, and to networks with any number of layers.

*2. Statistical direct learning*

For a learning set LS, whose representativity (this time in the statistical sense) of the universe of data is fundamental, a statistic of the frequency of the pairs of signals in input at the bottom layer of the network is executed. (Here "pairs" of signals are discussed with the understanding that the network SU have, as said, two input ports: more generally, if $h$ is the number of these ports, it gives $h$-uple ordinates). On this basis then the pairs with a total frequency above a previously set threshold are extracted and assigned a code (the next available, for example from $0$ to $k-1$, where $k$ is the number of such pairs). All other pairs are rated "unclassified". The implementation consists of filling a codification matrix $E(0{:}k{-}1, 0{:}k{-}1)$ as in the case described previously.

This procedure now is applied, as in deterministic learning, to successive layers up to the top of the network, where desired codes are imposed as output values. When this procedure is finished the network is statistically trained. The representativity and trustworthiness of the learning are determined by the frequency threshold mentioned above. Obviously, the tendency to 1 of these thresholds leads statistical learning to coincide with deterministic learning.

*3. Direct learning based on distance*

This procedure allows more complete network training, even in the prescence of a limited LS (as long as it remains representative of the statistics of the input signals). Moreover, this allows a reduction in the number of codes used to define the transfer functions without similarly reducing the processing abilities outside the LS.

The learning procedure continues in each layer as in the previously described case, until extraction of the $k$ most frequent codes (which we call "proper codes") takes place. For all other pairs, instead of the code "non classifiable", the code of the closest pair with proper code is assigned, according to the rule established. In other words, if $A,B$ is a pair of layer $j$ to which a proper code $E_{j+1}(A,B)$ at layer $j+1$ has not been assigned, $A,B$ is classified with the code $E_{j+1}(X,Y)$, where $X,Y$ is the pair with proper code for which $D_j(A,X) + D_j(B,Y)$ is minimum (where $D_j$ is the function of the distance to layer $j$, derivable from the distance to layer 0).

The statistical direct learning procedures based on distance are particularly well suited for use in approximate calculation or in intrisically redundant signal processing. This last, for example, is the case for all structured signal processing applications, pattern recognition and understanding (automatic vision, image processing and recognition, speech recognition, written information recognition, etc.).

## 4. Back-learning methods and procedures

Back-learning procedures allow the learning phase to be refined, highlighting the structures corresponding to the internal properties of the LS data. These base themselves on the idea that if pairs (or groups) of SU input codes produce, for a trained SU, the same codes upon exiting the SU, then the codes of the pair (or the group) are equivalent for the processing purposes for which the network was trained.

As a non-limiting example, if the transfer function for an SU with two input ports and one output port, let's say the $j$-th of the $i$-th layer $E_{ij}(X,Y)$, is such that, for all $C$,

(1)     $E_{ij}(A,C)=E_{ij}(B,C)$ or $E_{ij}(C,A)=E_{ij}(C,B)$,

i.e. if the input codes $A$ and $B$ always give rise to the same codifications, then for the processing purposes for which the network was trained $A$ and $B$ are equivalent and may therefore be identified.

For example, if in treating a text lower case "a" and upper case "A" lead, when combined with any other alphabetic symbol, always to the same codes, it means that in processing, the text in question may be written indifferently with upper or lower case letters. In this case there is a verification of the condition presented in (1) and therefore upper and lower case "a" or "A" are equivalent and may be identified.

The extension of the condition given in (1) to SU with more than two input ports and many ouput ports is obvious and therefore will not be explained here.

More generally, for all the conditions for which (1) is an example, that show partial or total equivalences of groups of codes, indicate the prescence of local or global properties of the data relative to the processing tasks. Note that, as far as equivalence is concerned, the codes not assigned in learning, if necessary, may be considered indifferent. In all these situations it is possible to use back-learning that, besides highlighting these properties, allows a dimensionality reduction of the transcodification matrices. This simplifies network implementation and allows correct processing of data outside the LS.

Three back-learning procedures may be used to illustrate this premise, only as an example, to clarify the concept of "substitution" of equivalent codes (or groups of codes).

### a) Deterministic back-learning

Starting from the layer at the top of the network (last, or output, layer) it begins to substitute all codes that verify type (1) equivalence conditions. In the example given in (1), B may be substituted by A, at the SU input of the $j$-th layer as well as at the output of the $(j-1)$-th layer.

Therefore, the procedure here described back tracks to the SU at the input layer. In general, this procedure may be iterated until equivalent codes are no longer identified.

### b) Statistical back-learning

Statistical back-learning procedures covered by the patent are those procedures that lead to the substitution of statistically equivalent codes or groups of codes, that is groups of codes for which the conditions expressed in (1) and the others cited above are verified non deterministically, but with frequency above a predetermined threshold.

For example, the expression (1) would be changed to

(2)     $_{Pr}[E_{ij}(A,C){\neq}E_{ij}(B,C)]{<}\nu_1$ or $_{Pr}[E_{ij}(C,A){\neq}E_{ij}(C,B)]{<}\nu_2$

where $p_r$ is the frequency in the LS and $\nu_1$, $\nu_2$ are given thresholds.

The expressions in (2) mean that the codes $A$ and $B$ may be considered statistically equivalent if the probability - or better yet, the frequency - in an LS with which different codes are generated is below the thresholds $\nu_1$, $\nu_2$ that condition the trustworthiness of the substitution.

When $\nu_1$, $\nu_2$ tend toward 0 conditions (1) and (2) tend to coincide. Even in this case the statistical equivalence is generalized to all types of SU and all cases of identical groups of codes, as in the preceeding case.

This back-learning procedure is identical to the deterministic procedure, except that here *statistically* equivalent codes are substituted. Note that every substitution frees at least one code, that may be used, in the case in which direct statistical learning has been carried out, to substitute an improper code with a proper code, in this way bettering the representativity of the data in the set.

### c) Distance-Based Back-Learning

In this procedure the conditions of equivalence, or statistical equivalence, are substituted by conditions of "metric equivalence": codes equivalent in measure are those codes that generate codifications whose distance, with the measure of the data space in use, is below a predetermined threshold.

Whichever learning scheme is adopted, the data are introduced to the input IN of network 1, which is already trained: the outputs of each layer constitute the inputs to the next.

The last layer outputs the result of the processing. A single complete process requires as many elementary cycles as there are layers, but uses them one at a time, in sequence. Thus, the throughput of an entire process is in time equal to the duration of the elementary cycle.

In the processing phase the SU associate, according to the training received in the learning phases, the appropriate configuration of the successive input data at every configuration of data input. The set of outputs of the SU of one layer is the configuration of the input data for the next layer.

Some specific examples of learning procedures are presented at the end of the present description. Now the structure of such a machine, or of a processing circuit able to implement any network 1 of the type previously described, for the learning phase as well, will be described.

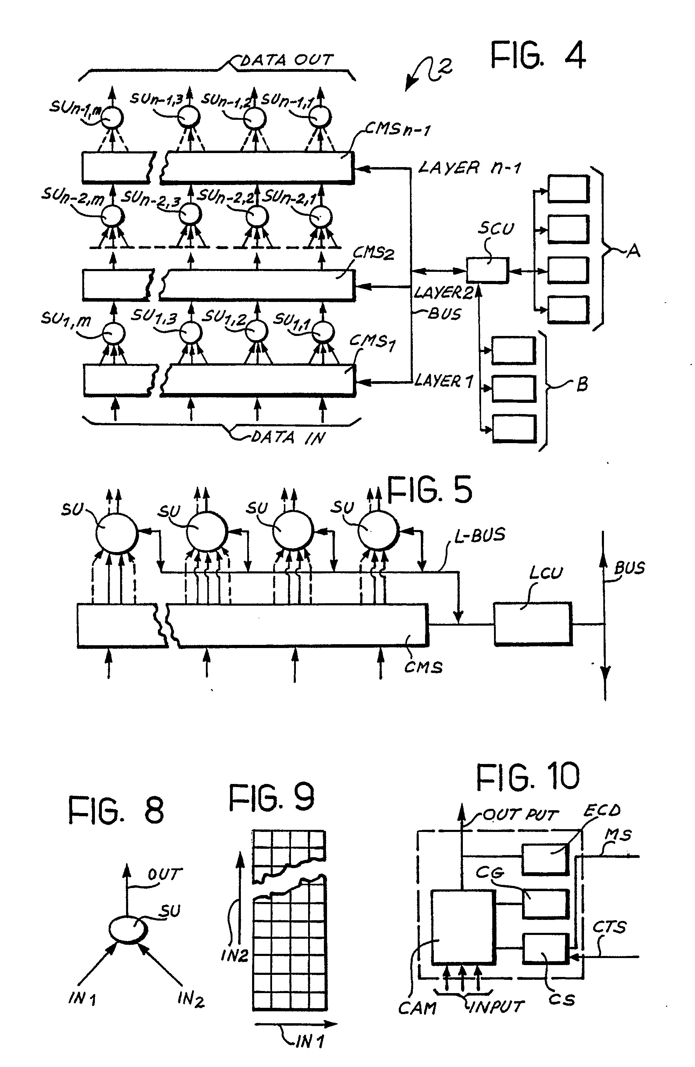

This type of machine (S-machine) is based on a hierarchic structure of modular units that allow configuration of any type of network 1. In Fig. 4 an example of a typical implementation is given. The machine is composed of a number (n in the example) of functionally identical layers, a system control unit (SCU) that communicates with all the layers through a system bus BUS, and with both standard (A) and process (B) periferials.

Each layer is composed of a connection management system CMS (Fig. 5), which actuates the connections between SU nodes so as to form the network 1 requested.

In the configuration phase SCU defines the number of layers to implement, the connectivity and the structure of the SU of all layers, sending the relative commands to each CMS.

In the training phase the LS data are sent as input to the first layer (DATA IN), while for output (OUT) the desired changes are imposed. In this phase the SU are trained with the previously described learning procedures.

When training is completed, the SU will be structured so as to fit each configuration at input with the appropriate output configuration, according to the procedures described above. If the SU are implemented to act as memory units in which outputs are tabulated in function of inputs, that are therefore interpreted as "addresses" for the tabulation, then every layer furnishes output in an elementary address cycle. The output of each layer constitutes the input data of the successive layer: the entire process of an input data set lasts for as many cycles as there are layers, independently of the processing complexity. At the end of a cycle the first layer is, however, already available for the next input data set, therefore the effective throughput of the machine is of an entire process per cycle, independent of the process complexity and the number of layers requested. If, for example, components with a cycle of 20 nsec are used, the machine can execute a complete processing of any complexity about every 20 nsec. If this corresponded to 100 Mflop/s, the equivalent capacity of the machine becomes equal to 5 GFlop/s.

The following illustrates all the units that constitute machine 2 in Fig. 4. It is evident that the intrinsic modularity of the system allows machines to be realized with calculation capacity proportional to the hardware realized. For example, a structure with only one set of SU and only one CMS allows networks to be configured with any number of layers, even to connect, at cycle end, the outputs of the layer to its input and change the SU memories. In this case the throughput diminishes with the number of layers: more precisely, organs of communication may be planned so that an entire process that requires n layers is executed in n elementary address cycles. Each layer of machine 2 is composed of the set of its SU of that layer, from a system of configurations and management of the CMS connections and gives a layer control unit LCU shown in the example in Fig. 5. The LCU communicates with the SCU on the system bus BUS, with CMS and the SU through another bus L-BUS. Obviously, these busses may be substituted by dedicated or changed lines.

The LCU sends to CMS the commands to actuate the requested connections, according to the instructions received from the SCU. It also makes provision for structuring the SU with the number of input ports and output ports requested, through the SU-L-BUS connection, consequently to organize the internal memory. Moreover, when a trained configuration is loaded from the library, always through the connection cited, the SU memories are loaded as well, as will be explained in more detail below.

In the learning phases the SU, which have been connected according to the computing topology requested, operate in the previously described ways, according to the schemes: deterministic, statistical or distance based. For the layer with the most outputs, LCU provides, through the L-BUS, the imposition of the SU out puts. In the back-learning phase LCU controls, through the same bus, the substitution of the equivalent codes.

In the execution phase the layer acts as any layer of a non-configurable network (that is with cabled "topology"), associating in a cycle at every input set the corresponding output set. In that phase the LCU can effectuate a diagnostic monitoring of the functioning of the layer.

Since one of the characteristics peculiar to network 1 is that it highlights the existence of properties internal to the data structures, above all with the application of the back-learning procedures, LCU is also used to analyze the contents of the SU memories, to which it has access through the L-BUS. It sends information about these to the SCU, that may in this way communicate, by means of the standard periferals A, the structures of the primitives and the properties determined.

Lastly, if one wants to memorize a complete and trained configuration of machine 2, LCU sends to the SCU all the data about the structuring of the SU connections and the contents of their memories. In this way the configuration may become part of the appropriate library.

The CMS may be realized with a modular structure: in Figs. 6 and 7 the CMS is basically a system of programmable change that, according to rules set out by the LCU, allows activation of the connections requested between SU. These may be realized with a modular structure: Fig. 6 shows a functional scheme that exemplifies one such module. The switches indicated allow all possible connections between the module's input ports A and B and output ports C and D to be carried out. The connections with adjacent modules are assured by the connections labeled a, B, g and d. Architecturally, the modules that make up CMS may be realized with a multibus structure, either completely parallel as in the example in Fig. 7, or by partial (or total) sharing of the bus lines. The choice depends on the speed that one wants to obtain: total parallelism allows the maximum speed compatible with the components, but requires a number of lines equal to the maximum number of SU available on the CMS. On the other hand, in total sharing the bus is reduced to a single line, but the cycle is proportionally lengthened to the number of SU addressed on the CMS.

The LCU allow the CMS to be "extended" beyond the physical availability of the hardware, using the same hardware in successive cycles.

The SU are the basic elaborative elements of machine 2, and therefore of network 1. As was already mentioned, these may be configured with any number $n_i$ of input ports and $n_o$ of output ports. Basically their function is to associate the appropriate configurations of the $n_o$ output signals to each configuration of the $n_i$ input signals. These can operate as transcodification matrices and therefore may be carried out with normal memory devices.

In the learning phase, such memories are filled according to the previously described procedures. In the data processing phase (the equivalent of the program execution phase in a Von Neumann machine) they are used as look-up tables: input data are interpreted as the address in output data tables. Therefore, whatever the complexity of the transfer function realized, tabulated *de facto* in the SU, the output requested is produced in the time taken by a single address cycle. Since all SU of the same layer operate in parallel and independently, the execution time for an entire process consists of as many elementary cycles as there are layers in the configuration of the machine. All the same, it should be noted that each layer operates on the data output by the preceeding layer (therefore it has a fort of pipe-line structure). The average effective throughput of an entire process therefore is of a single cycle, independent of the amount of data input, the number of layers and the complexity of the processing, and therefore independent of the number of operations to put to use to realize it on a Von Neumann machine.

The simplest SU structure is that of a conventional memory, organized as a table: the input data are used to address, in a single cycle. the output data (Fig. 8).

To use such a structure, it can be foreseen that, in the learning and back-learning phases, the functions of code generation and substitution of equivalent codes may be carried out with a specific program, resident in the LCU, able to be realized with a conventional microprocessor.

The SU however, may be carried out to advantage with Content Addressable Memory (CAM), especially in cases in which it is not necessary to memorize the output corresponding to all the possible input configurations (approximate calculations, signal recognition and processing problems, in which the intrinsic redundancy is always very high). If there is a desire to accelerate to the maximum the learning and back-learning phases, it may be convenient to configure the SU as indicated in the example in Fig. 10: besides the CAM, SU include an empty code detector ECD, a code generator CG and a code substitutor CS.

Alternatively, it may also be convenient to implement in the SU a memory storing coefficients of suitable polynomials.

Through the command Mode Selection (MS), the LCU communicates the operating mode to the SU:

*In the first phase of statistical learning -* (calculation of the frequency of the *h*-uple in input) the CG, which may be a standard incremental counter, in conjunction with ECD, increments by 1 the content of the output section of the CAM that corresponds to the configuration of the inputs verified. In this way, at the end of the phase each location of the CAM will contain the number of occurrences of the configurations of the corresponding inputs. The set of such values allows the LCU to decide which configurations effectively must be codified in the CAM, according to procedures of the type previously described.

*In the second phase of statistical and deterministic learning* the codes to associate to the input configurations are sequentially generated by CG.

*Finally, in the back-learning phase* CS proceeds to substitute equivalent codes, received from LCU on the CTS line, by the previously described procedure.

It is possible, lastly, to preventively provide the SU with a device of distance measure, and of codification based on this, according to procedures of the type previously explained.

Since CAM are standard devices (available on the market as components) and ECD, CG and CS simple devices capable of being realized in many ways with conventional projection techniques (if necessary even with elementary microprocessors), it is not necessary here to further develop a possible implementation.

The LCU is predisposed to manage an entire layer in all the machine's functions and configurations. Moreover, given the hardware resources actually available in the layer (number and type of SU) and the necessities of processing, these provide - when necessary - for their use in any number of cycles. If, for example, the layer has $n$ SU and the problem requires $3n$ SU, LCU, by means of an appropriate program, breaks the problem into three parts, each corresponding to $n$ SU. These, then, are processed in succession, on the $n$ SU physically available.

It may therefore be convenient to realize the LCU with a standard microprocessor, in which the following programs may be stored in memory: configuration of the layer, with management of the CMS; management of learning and back-learning; monitoring and synchonization of the transfers from the previous layer and to the next layer, etc.

Finally, LCU communicates with the SCU, through the BUS system bus, in such a way as to give the SCU coordination and control of the whole machine.

It is also possible to realize the LCU in hardware, with standard components, which allows greater speed in the configuration and learning phases. All the same, the microprocessor solution generally may be accepted in that the processing times of the execution phase don't depend on the realization of the LCU: it is in this phase that great speed normally is necessary, while for learning, which corresponds to the programmation phase of a Von Neumann machine, longer times may be acceptable. The principal assignments of the SCU are:

- the configuration of machine 2, or the definition of the number of layers, of the connectivity and therefore of the single layers (actuation is by the LCUs);
- management of the learning processes, as previously described;
- management of the standard peripherals 1 (discs, printers, CRT, etc.);
- system monitoring (functioning, diagnostic tests, etc.);
- loading of library configurations in the SU, for the execution of processing for which learning already has been done;
- management of the process B periferals, except those with a high data-rate, which are put on the input and output of the network constituting machine 2.

All these functions may be advantageously realized on a conventional computer by developing specific programs, that furthermore dont require particular insights or techniques. The computer of the SCU also may be used to train machine 2 to resolve those problems for which there is an algorithm that provides a solution. In that case it is sufficient to develop a program that generates the possible input data to the SU and calculates for them, with the known algorithm, the relative outputs, memorizing all in the SU memories. This is one of the types of learning. In this case as well, in the execution phase machine 2 requires only one cycle per layer, independently of the number of operations foreseen in the resolving algorithm. The calculation time on machine 2 therefore may be less than that of a conventional machine, even one of many orders of magnitude.

As indicated, the SCU may be used to transfer to mass memory (discs, optical discs, tapes, etc.) the machine 2 configuration data as well as the contents of all the SU. In this way it is possible to build a library of processes already implemented and stored in mass memory that allows the complete configuration for the execution of a process to be reloaded on the machine, in this way reaching the same level of flexibility that libraries of programs give conventional machines.

Finally, it may be convenient to combine the functions of the LCU with those of the SCU: in that case the LCU hardware is substituted by programs executed in the SCU that must be interfaced directly with the SU and the CSM of all layers.

EXAMPLES

Applications of the proposed invention will now be described in reference to three specific, non-limiting examples. In each case, the input description, the topology of the network, the structure of the SU and related details are only specified for the sake of illustration and could be modified in accordance with the requirements of the processing problem at hand.

*Image recognition (typed and handwritten numerical characters)*

The characters, digitalized in a binary matrix of pixel elements (e.g. a 16×32 matrix), are sent to the first layer of a network of five two-dimensional layers of the type shown in Fig. 2, with each SU of the same layer defining the same function. The bitmaps may be encoded through 32 integer values, each of which encodes a 4 × 4 portion of bit-map. At each level two adjacent codes are substituted by an appropriate output code, thereby halving the length of the description at each step. The last level has as input two codes. A code that represents the class of characters input to the network is assigned to these in output. During the learning phase, carried out with the previously described direct stastical method, the network is trained, requiring each character of the LS to correspond to the output code of that class of characters. At the end of that phase the system is able to recognize exactly all the configurations in the LS. After the statistical back-learning procedure, one passes to the recognition phase.

*Speech recognition*

The S-Net may be composed of 64 two-input, simple output SU on six levels. Each phonetic signal can be described by its spectrum, obtained for example by applying a Fast Fourier Transform. This spectrum may be processed by subdivision into 352-sample time windows, corresponding at about 23,5 ms to a sampling frequency of 15 KHz. The pace of advancement from one window to the next varies according to the normalization used. For each of these windows, the first eight cepstral mel scaled coefficients can be calculated. Through a Vector Quantization (VQ) these data can be compressed into a VQ-Codebook of 256 distinct codes. The network may thus be trained by having the phonem identification code correspond to the spectra of known phonems (LS). After the statistical back-learning procedure, the network is then able to associate phonem codes to the spectra of unknown signals (recognition phase).

*Edge detection from monochrome images*

The S-Net may consist of three levels of SU with two inputs and one output. An image sampling at 512 × 512 pixels with 256 grey levels (1 byte) per pixel may be executed. The images input to the network may then be represented by a 512 × 512 byte matrix. Such images are then sampled, for example, by using 3 bit per pixel codification techniques, taking into consideration 'Y' form outlines (two pixels above at the sides and one pixel below). Each bit is then set equal to 1 if one of the nearby pixels has value greater than the central pixel. The direct learning deterministic algorithm is then applied as previously described. For the back-learning procedure the statistical algorithm may instead be used.

**Claims**

1. Data processing network with interconnective nodes (SU), including nodes ordered in many hierarchic layers, in which each node (SU) has its respective transfer function, said transfer function being selectively determinable in differentiated mode for diverse processing functions.

2. Machine to realize a data processing network in conformance with Claim 1, characterized by its including:
• multiple units (SU) that function as nodes, organized in several hierarchic layers,
• for each layer, a connection management system (CMS) able to make connections between the nodes (SU) of its respective layer and the nodes (SU) of at least one adjacent layer in the hierarchic structure,
• a system control unit (SCU) and
• at least one connection system (BUS) that acts as agent between said system control unit (SCU) and all machine layers able to realize at least one learning strategy in which:
a data learning set (LS) is sent to the input of the bottom hierarchic layer of the machine while at the output of the top layer at least one desired output is imposed; the output of each layer is designed to build the input data set of the layer immediately above it in the machine's hierarchic structure.

3. Machine in conformance with Claim 2, characterized by inclusion of configuration pieces (L-BUS) able to structure the network nodes (SU) with a number of inputs and outputs selectively determined to meet the data processing needs.

4. Machine in conformance with Claim 2 or Claim 3, characterized by the inclusion, as alternatives or in combination, of:

• memory units to store a predetermined network configuration data set, at the end of a learning phase, and

• units (A) to read, from the outside, data configurations between the network and an outside source.

5. Machine in conformance with any of the Claims from 1 to 4, wherein at least some of said nodes (SU) realized in the form of a look-up table or, alternatively, as a memory storing coefficients of suitable polynomials.

6. Machine in conformance with Claim 2, wherein said Connection Management System (CMS) is basically made up of a communication network.

7. Learning procedure to build a network in conformance with Claim 1, characterized by its containing the following operations:

• to bring to the network input a set (LS) of statistically significant configurations of input data, and

• to impose at the network output (OUT) configurations corresponding to the desired data processing result.

8. Procedure in conformance with Claim 7, characterized by the inclusion of operations that:

• generate, for each data configuration brought to the input layer of network (1), an input-output association code, and

• propagate that phase to the top of network (1).

9. Procedure in conformance with Claim 8, characterized by also including an operation to substitute those codes whose association always produces the same exit codes, thereby identifying equivalent codes and proceeding to eliminate redundant codes.

10. Procedure for realizing a network (1) in conformance with Claim 1, characterized by inclusion of the following operations:

• bringing to the input layer of network (1) a learning set (LS) of data representative of the universe of data processing problems under examination;

• to codify said learning set (LS) at the lowest hierarchic layer of network (1) so as to generate respective outputs destined to constitute the inputs to the hierarchic layer immediately above,

• to propagate said codification action ordinarily proceeding toward the hierarchic layers above network (1) up to the penultimate layer of network (1) itself,

• to associate, at the top hierarchic layer in network (1) a code consisting of the desired solution; the unassigned codes in the above-mentioned phases correspond to unclassifiable configurations.

11. Procedure in conformance with Claim 10, characterized by having the learning set (LS) formed from a frequency statistic of the possible occurences of input signals foreseen for network (1), incorporating in said set (LS) only the input data the global frequency for which surpasses a predetermined threshold

12. Procedure in conformance with Claim 11, characterized by learning data the global frequency of which does not surpass said predetermined threshold. Instead, the same code associated to data included in said (LS) are associated to them and presented a distance that does not go below a given threshold

13. Learning procedure for any of Claims 10-12, characterized, moreover, by inclusion of operations that:

• determine whether groups of input codes on a node (SU) produce the same codes at the output of the node (SU) itself so as to be equivalent for the purposes of data processing, and

• identify (unify) such equivalent codes.

14. Procedure in conformance with Claim 13, wherein the determination of equivalent codes and the unification of equivalent codes are carried out gradually starting from the highest hierarchic layers of network (1), the determination of equivalence being made by identifying structures and properties internal to the data.

15. Procedure in conformance with Claim 13 or Claim 14, characterized by its inclusion of the unification operations between the codes that, even though not being deterministically equivalent, are shown to be equivalent with a frequency above a predetermined threshold.

16. Procedure in conformance with Claim 13 or Claim 14, characterized by its inclusion of a unification operation between codes that, even though not deterministically equivalent, correspond to data with a distance below a predetermined threshold in the sphere of a respective metric.

17. Use of a network in conformance with Claim 1 and/or of a machine in conformance with any claim from 2 to 6 for signal processing, particularly for an application chosen from the following group: configuration analysis, configuration recognition and configuration understanding.

18. Set of networks in conformance with Claim 1 or of machines in conformance with any of the claims from 2 to 6 in the form of a library.

## FIG. 1

LAYER 3

LAYER 2

LAYER 1

OUT

SU

$f_2$

$f_{10}$  SU

$f_{11}$  SU

$f_{12}$  SU

SU

$f_{00}$  $f_{01}$  $f_{02}$  $f_{03}$  $f_{04}$  $f_{05}$  $f_{06}$  $f_{07}$  $f_{08}$

SU

SU

SU

IN

## FIG. 2

OUT

SU  LAYER 4

SU

SU  LAYER 3

SU

SU

LAYER 2

SU

SU

LAYER 1

IN

## FIG. 3

OUT

$h$  SU  LAYER 2

$g_1$  SU

$g_2$  LAYER 1

$X_1$  $X_2$  $X_3$  $X_4$

## FIG. 7

CMS

## FIG. 6

$C$  OUT  $D$

$\mu$  $\alpha$

$\delta$  $\beta$

$A$  IN  $B$

FIG. 4

DATA OUT

SUn-1,m   SUn-1,3   SUn-1,2   SUn-1,1

CMSn-1

LAYER n-1

SUn-2,m   SUn-2,3   SUn-2,2   SUn-2,1

SCU

CMS2

LAYER 2

BUS

A

SU1,m   SU1,3   SU1,2   SU1,1

CMS1

LAYER 1

B

DATA IN

FIG. 5

SU   SU   SU   SU

L-BUS

LCU

BUS

CMS

FIG. 8

OUT

SU

IN 1   IN 2

FIG. 9

IN 2

IN 1

FIG. 10

OUT PUT   ECD

MS

CG

CTS

CAM   INPUT   CS

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE TRANSACTIONS ON ACOUSTICS, SPEECH, AND SIGNAL PROCESSING, vol. 36, no. 7, July 1988, pages 1180-1190, IEEE, New York, US; J.J. VIDAL: "Implementing neural nets with programmable logic" * Page 1180, column 2, lines 4-18; page 1182, column 1, lines 19-47; column 2, lines 1-4,13-29; page 1183, column 1, lines 26-30; page 1184, column 1, lines 10-53; column 2, lines 8-34; page 1185, column 1, lines 1-16; figures 2,3,4; page 1187, column 1, lines 28-40 * | 1,7 | G 06 F 15/80 G 06 F 15/18 |
| A | IDEM | 2,10 | |
| X | EP-A-0 195 569 (XEROX) * Page 1; page 2, lines 1-11; page 4, lines 3-17; page 9, lines 8-28; page 10, lines 32-36; page 11, lines 1-5; figures 1,8 * | 1,7 | |
| A | PROCEEDINGS, FIRST INTERNATIONAL CONFERENCE ON SUPERCOMPUTING SYSTEMS, St. Petersburg, Florida, 16th-20th December 1985, pages 641-649, IEEE, New York, US; S. KUMAR et al.: "A multi-level associative processor architecture for parallel processing" * Page 641, column 1, lines 1-7; page 642; figure 1 * | 1,2,4,5 | TECHNICAL FIELDS SEARCHED (Int. Cl.5) G 06 F 15/80 G 06 F 15/18 G 11 C 11/54 G 11 C 15/00 |
| A | US-A-4 069 473 (VITALIEV) * Column 3, lines 65-68; column 4, lines 1-42; column 5, lines 49-60; figures 1,3,4 * | 1,2,4,5 | |
| | --- -/- | | |

The present search report has been drawn up for all claims

| Place of search | Date of completion of the search | Examiner |
|---|---|---|
| THE HAGUE | 12-07-1989 | DHEERE R.F.B.M. |

European Patent
Office

**EUROPEAN SEARCH REPORT**

Application Number

EP   90 10 7235

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IEEE FIRST INTERNATIONAL CONFERENCE ON NEURAL NETWORKS, San Diego, CA, 21st-24th June 1987, pages III-411 - III-418, IEEE, New York, US; L.T. CLARK et al.: "Comparison of a pipelined "Best match" content addressable memory with neural networks" <br> * Page 411, lines 13-29, page 412, figure 1; page 414, figure 2; page 415, lines 22-27 * | 1,2,4,5 ,7,10, 11,12, 15,16 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 12-07-1989 | DHEERE R.F.B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)